# EUROPÄISCHE PATENTSCHRIFT

(11) **EP 2 522 833 B1**
(45) Veröffentlichungstag und Bekanntmachung des Hinweises auf die Patenterteilung: **22.10.2014**
(21) Anmeldenummer: 12003440.0
(22) Anmeldetag: 04.05.2012
(51) Int. Cl.: F02C 9/18, F04D 27/02, F02C 6/08, F02C 7/052

(54) **Gasturbinentriebwerk mit Zapfluftentnahmevorrichtung**
Gas turbine engine with bleed air removal device
Turbine à gaz avec dispositif de prélèvement d'air de tirage

(30) Priorität: 12.05.2011 DE 102011101331
(43) Veröffentlichungstag der Anmeldung: 14.11.2012
(73) Patentinhaber: Rolls-Royce Deutschland Ltd & Co KG, 15827 Blankenfelde-Mahlow (DE)
(72) Erfinder: Pichel, Sacha, 12203 Berlin (DE)
(74) Vertreter: Hoefer & Partner

(56) Entgegenhaltungen:
- EP-A1- 0 374 004
- EP-A1- 1 865 184
- EP-A2- 0 298 015
- FR-A1- 2 926 328
- GB-A- 2 047 815

## Beschreibung

Die Erfindung bezieht sich auf ein Gasturbinentriebwerk mit zumindest einem Verdichter sowie mit zumindest einer Zapfluft-Entnahmevorrichtung.

Es ist aus dem Stand der Technik bekannt, dass im Bereich von Verdichtern Zapfluft entnommen wird, um beispielsweise den Massenstrom durch den Verdichter zu variieren und den Verdichter hinsichtlich der aerodynamischen Stabilität zu optimieren.

Weiterhin ist es bekannt, mittels der Zapfluft in das Gasturbinentriebwerk eintretende Partikel, beispielsweise Staub, Eispartikel, Wassertropfen oder Ähnliches abzuführen. Die Zapfluft wird dabei in einen Nebenstromkanal des Gasturbinentriebwerks abgeführt.

Aus dem Stand der Technik ist es weiterhin bekannt, entweder einzelne Zapfluftentnahmeöffnungen vorzusehen oder einen Ringkanal auszubilden, welcher sich um den Umfang erstreckt und im Gehäuse des Verdichters vorgesehen ist. Bei der Verwendung eines Ringkanals erweist es sich jedoch als nachteilig, dass der Querschnitt durch den Bauraum zwischen den Verdichterstufen begrenzt ist und die Entnahmeöffnung baubedingt axial, und damit überwiegend parallel zur Strömung, ausgerichtet ist. Dies führt zu einem vergleichsweise geringen freien Querschnitt senkrecht zur Strömung, wodurch insbesondere die Ableitung von Partikeln aus der Strömung durch das Kerntriebwerk nicht optimal gewährleistet ist.

Bei der Verwendung von einzelnen Klappen oder Ähnlichem für singuläre Zapfluftentnahmeöffnungen ergibt sich der Nachteil, dass zu deren Betätigung eine Vielzahl von Bauteilen benötigt wird, so dass der gesamte Aufbau kompliziert, kostenintensiv und gewichtsmäßig ungünstig ist. Im Übrigen erhöht sich die Fehleranfälligkeit derartiger komplizierter Ausgestaltungen.

Die FR 2 926 328 A1 beschreibt ein Gasturbinentriebwerk mit einer Zapfluftentnahmevorrichtung. Bei dieser ist in einem Ringkanal ein ringförmiges

Verschlusselement axial verschiebbar angeordnet. Unabhängig von dem Verschlusselement ist als separates Bauteil ein Strömungsteileransatz vorgesehen, welcher in der Öffnungsstellung in dem Strömungskanal vorsteht. Das Verschlusselement und der Strömungsteileransatz sind separate Bauteile, welche separat betätigt werden.

Der Erfindung liegt die Aufgabe zugrunde, ein Gasturbinentriebwerk mit einer Zapfluftentnahmevorrichtung zu schaffen, bei welchem die Zapfluftentnahmevorrichtung einfach und betriebssicher aufgebaut ist und die sichere Ableitung von in das Triebwerk eingetretenen Partikeln ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit ein Gasturbinentriebwerk vorgesehen, welches zumindest einen Verdichter aufweist, sowie zumindest eine Zapfluftentnahmevorrichtung. Die Zapfluftentnahmevorrichtung ist so ausgebildet, dass sie einen Ringkanal in einer radial äußeren Wandung eines Strömungskanals umfasst. In den Ringkanal kann somit um den gesamten Umfang verteilt Zapfluft abgeleitet werden. Es ist somit sichergestellt, dass in das Triebwerk eintretende Partikel am gesamten Umfangsbereich abgeleitet werden können. Weiterhin ist erfindungsgemäß vorgesehen, dass ein ringförmiges Verschlusselement verwendet wird, welches im Bereich des Ringkanals angeordnet ist. Das ringförmige Verschlusselement kann in im Wesentlichen axialer Richtung von einer Schließstellung in eine Öffnungsstellung verschoben werden. Da nur ein einziges ringförmiges Verschlusselement benötigt wird, kann erfindungsgemäß der Antrieb dieses Verschlusselements besonders einfach und störungsunempfindlich ausgebildet werden. Hierdurch verringern sich die Herstellkosten, es ergibt sich ein geringeres Gesamtgewicht und das Fehlerpotential wird verringert.

Das ringförmige Verschlusselement kann erfindungsgemäß somit von einer Schließstellung in eine Öffnungsstellung verschoben werden. Bei der Schließstellung ist die Zapfluftentnahmevorrichtung erfindungsgemäß im Wesentlichen verschlossen und/oder trotz eines geringfügig verbleibenden Totvolumens, welches die Durchströmung des Ringkanals nicht negativ beeinflusst, wirkungslos.

In der Öffnungsstellung wird ein Strömungsteileransatz, welcher an dem Verschlusselement vorgesehen ist, in den Strömungskanal vorgeschoben. Erfindungsgemäß ist der Strömungsteileransatz ringförmig ausgebildet. Er führt somit zu einer Strömungsteilung und leitet einen radial äußeren Teil der Strömung in die Zapfluftentnahmevorrichtung. Durch geeignete Dimensionierung und Ausgestaltung der Zapfluftentnahmevorrichtung sowie des Strömungskanals ist es möglich, in sicherer und effektiver Weise einen vorgegebenen Massenstrom sowie die darin enthaltenen Partikel abzuführen.

Da sich die in das Triebwerk eintretenden Partikel (Staub, Eispartikel, Regentropfen oder Ähnliches) durch die Zentrifugalkraft eines vorgeschalteten Fans und/oder die Verdichterrotoren in einem radial äußeren Bereich des Strömungskanals sammeln, können diese zuverlässig durch die Zapfluftentnahmevorrichtung abgeführt werden.

Besonders günstig ist es, wenn der Strömungskanal im Bereich der Zapfluftentnahmevorrichtung in radialer Richtung in einem Winkel zu einer zentrischen Triebwerksachse ausgerichtet ist. Hierdurch wird die durch den Strömungskanal verlaufende Strömung radial nach innen umgelenkt und es erhöht sich der senkrecht zur Strömung liegende freie Querschnitt der Entnahme. Dies wiederum führt dazu, dass die abzuführenden Partikel sich im radial äußeren Bereich des Strömungsquerschnitts des Strömungskanals sammeln und somit in zuverlässiger Weise zu der Zapfluftentnahmevorrichtung gelangen. Weiterhin ist durch diese Konstruktion eine einfache Möglichkeit geschaffen, den Strömungsteileransatz (Strömungsleitelement) durch axiale Verschiebung gegen die Strömungsrichtung in den Querschnitt des Strömungskanals einzubringen.

Die erfindungsgemäße Zapfluftentnahmevorrichtung kann hinter einem Stator eines Verdichters, bevorzugt eines Vorverdichters, angeordnet werden. Hierdurch ergibt sich ein geringer Platzbedarf der Zapfluftentnahmevorrichtung.

Alternativ ist es auch möglich, den Strömungsteileransatz der Zapfluftentnahmevorrichtung so anzuordnen, dass dieser in Strömungsrichtung hinter einem Verdichterrotor angeordnet ist. Hierbei führt die zusätzliche Zentrifugalkraft des Rotors zu einer Ansammlung der abzuführenden Partikel am radial äußeren Randbereich des Strömungskanals. Auch hierdurch wird die Ableitung der Partikel verbessert.

Das erfindungsgemäß vorgesehene Verschlusselement und/oder der Strömungsteileransatz können in bevorzugter Weise mit Dichtungsmitteln versehen sein, um in der Öffnungsstellung und/oder der Schließstellung geeignete Abdichtungen vorzunehmen.

Im Folgenden wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine Detailansicht der erfindungsgemäßen Zapfluftentnahmevorrichtung in der Öffnungsstellung und
- Fig. 3: eine Darstellung der Zapfluftentnahmevorrichtung in der Schließstellung.

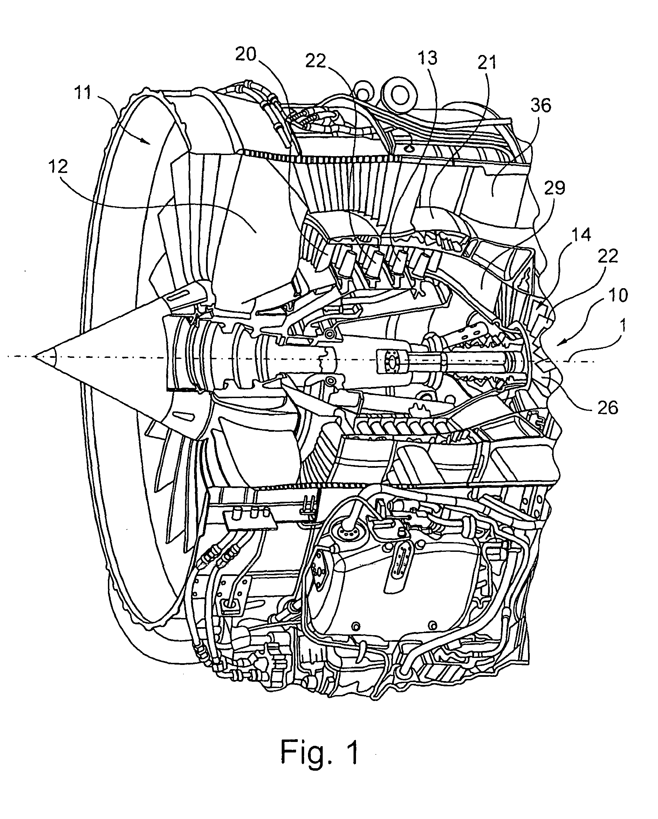

Die Fig. 1 zeigt eine schematische Darstellung eines Gasturbinentriebwerks gemäß der vorliegenden Erfindung.

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Zwischendruckkompressor 13, einen Hochdruckkompressor 14, Brennkammern, eine Hochdruckturbine, eine Zwischendruckturbine und eine Niederdruckturbine sowie eine Abgasdüse, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufein 22 auf, die radial nach außen von einer drehbaren Trommel oder Scheibe 26 vorstehen, die mit Naben der Hochdruckturbine bzw. der Zwischendruckturbine gekoppelt sind.

Die Turbinenabschnitte weisen ähnliche Stufen auf, umfassend eine Anordnung von festen Leitschaufeln, die radial nach innen vom Gehäuse 21 in den ringförmigen Strömungskanal durch die Turbinen vorstehen, und eine nachfolgende Anordnung von Turbinenschaufeln, die nach außen von einer drehbaren Nabe vorstehen. Die Kompressortrommel oder Kompressorscheibe 26 und die darauf angeordneten Schaufeln 22 sowie die Turbinenrotornabe und die darauf angeordneten Turbinenlaufschaufeln drehen sich im Betrieb um die Triebwerksachse 1.

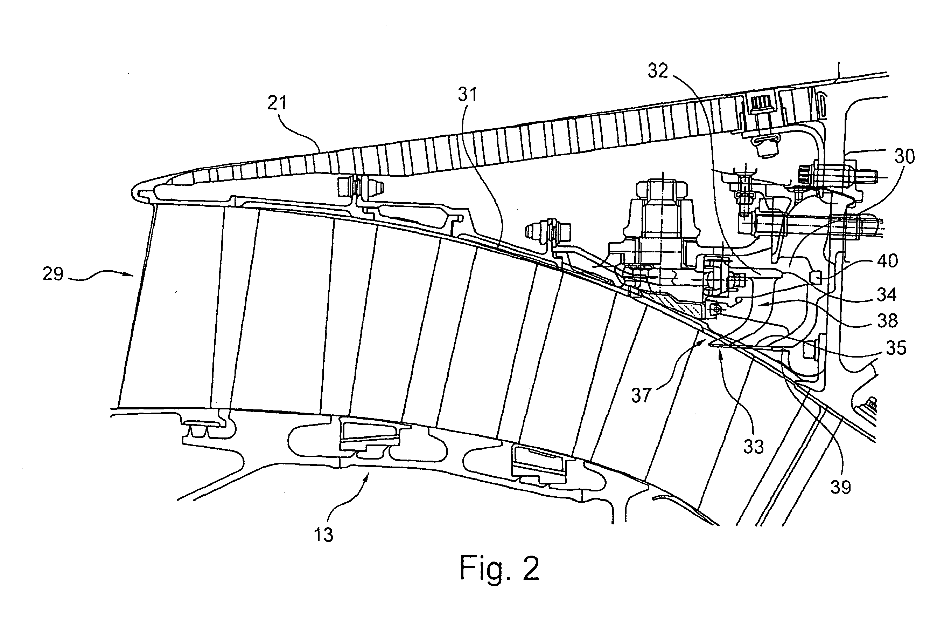

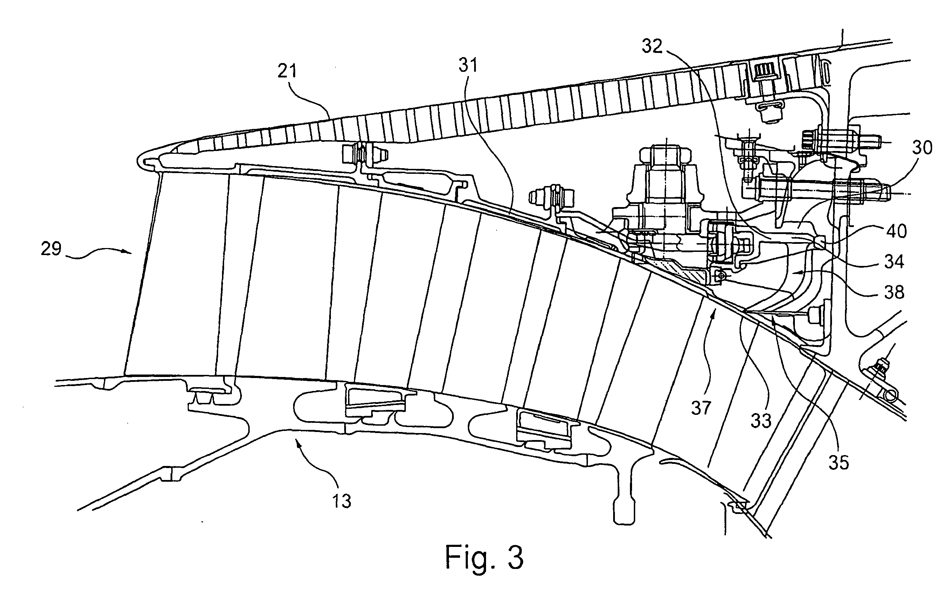

Die Fig. 2 und 3 zeigen in vergrößerter Darstellung einen ringförmigen Strömungskanal 29 im Bereich eines Verdichters 13, beispielsweise eines Vorverdichters. Der Strömungskanal 29 wird durch eine Wandung 31 radial nach außen begrenzt, welche Teil des Triebwerksgehäuses 21 ist.

Die erfindungsgemäße Zapfluftentnahmevorrichtung umfasst eine Eintrittsöffnung 37, welche ringförmig in der Wandung 31 ausgebildet ist und in einen Ringkanal 30 mündet.

Im Bereich des Ringkanals 30 bzw. der Eintrittsöffnung 37 ist ein ringförmiges Verschlusselement 32 angeordnet, welches in axialer Richtung, bezogen auf die Triebwerksachse 1, von einer Schließstellung (Fig. 3) in eine Öffnungsstellung (Fig. 2) verschiebbar ist. Der Antrieb des Verschlusselements 32 kann beispielsweise hydraulisch oder servomotorisch über einen Elektroantrieb erfolgen.

An dem ringförmigen Verschlusselement 32 ist mittels mehrerer, um den Umfang verteilter Streben 38 ein ringförmiger Strömungsteileransatz 33 befestigt. Der Strömungsteileransatz 33 ist, wie aus den Fig. 2 und 3 ersichtlich ist, als ebener Ring ausgebildet und in einem Ringschlitz 39 geführt. Somit wird sowohl in der Schließstellung als auch in der Öffnungsstellung sichergestellt, dass der in Strömungsrichtung hinten liegende Bereich des Strömungsteileransatzes 33 eine nicht erwünschte Einströmung in den Ringkanal 30 verhindert. Der in Strömungsrichtung hinten liegende Bereich des Strömungsteileransatzes bildet somit ein Dichtelement 35, welches mit dem Ringschlitz 39 zusammenwirkt.

Zum Verschließen der Zapfluftentnahmevorrichtung in der Schließstellung weist das Verschlusselement 32 an seiner in Strömungsrichtung rückwärtigen Seite ein Dichtelement 34 auf, welches in eine Nut 40 einbringbar ist.

Die Anordnung des Verschlusselements 32 kann stromab des Verdichters 13 erfolgen, entweder stromab von Statorschaufeln oder stromab von Rotorschaufeln. Bei der Anordnung stromab von Statorschaufeln ist es möglich, die Streben 38 in der Öffnungsstellung in die Zwischenräume zwischen einzelnen Statorschaufeln einzuschieben, um axialen Bauraum zu sparen.

Durch die erfindungsgemäße Ausgestaltung erfolgt eine verbesserte, zuverlässige Ableitung von Partikeln. Insgesamt ist die erfindungsgemäße Zapfluftentnahmevorrichtung einfach und betriebssicher aufgebaut und gewährleistet, abgesehen von der Ableitung von Partikeln, eine zuverlässige Entnahme von Zapfluft.

### Bezugszeichenliste:

- 1: Triebwerksachse
- 10: Gasturbinentriebwerk
- 11: Lufteinlass
- 12: im Gehäuse umlaufender Fan
- 13: Zwischendruckkompressor/Vorverdichter
- 14: Hochdruckkompressor/Hochdruckverdichter
- 20: Leitschaufeln
- 21: Triebwerksgehäuse
- 22: Kompressorlaufschaufeln
- 26: Kompressortrommel oder -scheibe
- 29: Strömungskanal
- 30: Ringkanal
- 31: Wandung
- 32: Verschlusselement
- 33: Strömungsteileransatz
- 34: Dichtelement
- 35: Dichtelement
- 36: Nebenstromkanal
- 37: Eintrittsöffnung
- 38: Strebe
- 39: Ringschlitz
- 40: Nut

## Patentansprüche

1. Gasturbinentriebwerk mit zumindest einem Verdichter (13) sowie mit zumindest einer Zapfluftentnahmevorrichtung, welche einen Ringkanal (30) in einer radial äußeren Wandung (31) eines Strömungskanals (29) umfasst, sowie mit einem ringförmigen Verschlusselement (32), welches im Bereich des Ringkanals (30) angeordnet ist und in im Wesentlichen axialer Richtung von einer Schließstellung in eine Öffnungsstellung verschiebbar ist, **dadurch gekennzeichnet, dass** das Verschlusselement (32) einen ringförmigen Strömungsteileransatz (33) umfasst, welcher in der Öffnungsstellung in dem Strömungskanal (29) vorsteht.

2. Gasturbinentriebwerk nach Anspruch 1, **dadurch gekennzeichnet, dass** der Strömungskanal (29) im Bereich der Zapfluftentnahmevorrichtung in radialer Richtung in einem Winkel zu einer zentrischen Triebwerksachse (1) ausgerichtet ist.

3. Gasturbinentriebwerk nach Anspruch 1 oder 2, **dadurch gekennzeichnet, dass** stromab einer Vorderkante des Strömungsteileransatzes (33) ein ringförmiges Dichtelement (35) angeordnet ist.

4. Gasturbinentriebwerk nach einem der Ansprüche 1 bis 3, **dadurch gekennzeichnet, dass** das Verschlusselement (32) mit Dichtungsmitteln (35) versehen und/oder mit Dichtungsmitteln im Bereich der Wandung des Strömungskanals (29) in Eingriff bringbar ist.

5. Gasturbinentriebwerk nach einem der Ansprüche 1 bis 4, **dadurch gekennzeichnet, dass** die Zapfluftentnahmevorrichtung im Bereich oder stromab eines Vorverdichters (13) angeordnet ist.

6. Gasturbinentriebwerk nach einem der Ansprüche 1 bis 5, **dadurch gekennzeichnet, dass** der Ringkanal (30) in einen Nebenstromkanal (36) mündet.

7. Gasturbinentriebwerk nach einem der Ansprüche 1 bis 6, **dadurch gekennzeichnet, dass** der Strömungsteileransatz (33) an dem ringförmigen Verschlusselement (32) mittels mehrerer, um den Umfang verteilter Streben (38) befestigt ist, wobei die Streben (38) sich in der Öffnungsstellung in die Zwischenräume zwischen einzelnen Statorschaufeln schieben.

8. Gasturbinentriebwerk nach einem der Ansprüche 1 bis 7, **dadurch gekennzeichnet, dass** die erfindungsgemäße Zapfluftentnahmevorrichtung hinter einem Stator oder einem Rotor eines Verdichters angeordnet wird

## Claims

1. Gas-turbine engine with at least one compressor (13) and at least one bleed-air tapping device, which includes an annular duct (30) in a radially outer wall (31) of a flow duct (29), and with an annular closing element (32), which is arranged in the area of the annular duct (30) and can be moved in a substantially axial direction from a closed position to an open position, **characterized in that** the closing element (32) has an annular flow divider projection (33) which in the open position projects in the flow duct (29).

2. Gas-turbine engine in accordance with Claim 1, **characterized in that** the flow duct (29) in the area of the bleed-air tapping device is aligned in the radial direction at an angle to a centric engine axis (1).

3. Gas-turbine engine in accordance with Claim 1 or 2, **characterized in that** downstream of a leading edge of the flow divider projection (33) an annular sealing element (35) is arranged.

4. Gas-turbine engine in accordance with one of the Claims 1 to 3, **characterized in that** the closing element (32) is provided with sealing means (35) and/ or can be brought in engagement with sealing means in the area of the wall of the flow duct (29).

5. Gas-turbine engine in accordance with one of the Claims 1 to 4, **characterized in that** the bleed-air tapping device is arranged in the area or downstream of a pre-compressor (13).

6. Gas-turbine engine in accordance with one of the Claims 1 to 5, **characterized in that** the annular duct (30) issues into a bypass duct (36).

7. Gas-turbine engine in accordance with one of the Claims 1 to 6, **characterized in that** the flow divider projection (33) is attached to the annular closing element (32) by means of several struts (38) spread around the circumference, with the struts (38) in the open position being inserted into the spaces between individual stator vanes.

8. Gas-turbine engine in accordance with one of the Claims 1 to 7, **characterized in that** the bleed-air tapping device in accordance with the invention is arranged behind a stator or a rotor of a compressor.

## Revendications

1. Moteur à turbine à gaz comportant au moins un compresseur (13) et au moins un dispositif de prise d'air de prélèvement, lequel comprend un canal annulaire (30) dans une paroi extérieure radiale (31) d'un canal d'écoulement (29), ainsi qu'un élément de fermeture (32) annulaire qui est disposé dans la zone du canal annulaire (30) et peut être déplacé essentiellement dans le sens axial d'une position fermée à une position ouverte, **caractérisé en ce que** l'élément de fermeture (32) comprend une saillie de diviseur de flux (33) annulaire qui, dans la position ouverte, fait ressaut dans le canal d'écoulement (29).

2. Moteur à turbine à gaz selon la revendication n° 1, **caractérisé en ce que** dans la zone du dispositif de prise d'air de prélèvement, le canal d'écoulement (29) est orienté dans le sens radial selon un angle par rapport à un axe de moteur (1) centrique.

3. Moteur à turbine à gaz selon la revendication n° 1 ou n° 2, **caractérisé en ce qu'**en aval d'un bord d'attaque de la saillie du diviseur de flux (33) est disposé un élément d'étanchéité (35) annulaire.

4. Moteur à turbine à gaz selon une des revendications n° 1 à n° 3, **caractérisé en ce que** l'élément de fermeture (32) est muni de moyens d'étanchéité (35) et/ ou peut être mis en prise avec des moyens d'étanchéité dans la zone de la paroi du canal d'écoulement (29).

5. Moteur à turbine à gaz selon une des revendications n° 1 à n° 4, **caractérisé en ce que** le dispositif de prise d'air de prélèvement est placé dans la zone ou en aval d'un pré-compresseur (13).

6. Moteur à turbine à gaz selon une des revendications n° 1 à n° 5, **caractérisé en ce que** le canal annulaire (30) débouche dans un canal de flux secondaire (36).

7. Moteur à turbine à gaz selon une des revendications n° 1 à n° 6, **caractérisé en ce que** la saillie du diviseur de flux (33) est fixée à l'élément de fermeture (32) annulaire au moyen de plusieurs entretoises (38) réparties sur la circonférence, sachant qu'en position ouverte, les entretoises (38) s'introduisent dans les espaces intermédiaires entre différentes aubes de stator.

8. Moteur à turbine à gaz selon une des revendications n° 1 à n° 7, **caractérisé en ce que** le dispositif de prise d'air de prélèvement conforme à l'invention est placé en aval d'un stator ou d'un rotor d'un compresseur.
